# EUROPÄISCHE PATENTSCHRIFT

(11) **EP 1 793 470 B1**
(45) Veröffentlichungstag und Bekanntmachung des Hinweises auf die Patenterteilung: **25.07.2012**
(21) Anmeldenummer: 05026252.6
(22) Anmeldetag: 01.12.2005
(51) Int. Cl.: H02K 3/12

(54) **Anordnung mit zwei stromleitenden Generatorstäben für einen elektrischen Generator**
Arrangement with two electrical conducting generator bars for an electric generator
Dispositif avec deux barres conductrices de générateur pour un générateur électrique

(43) Veröffentlichungstag der Anmeldung: 06.06.2007
(73) Patentinhaber: SIEMENS AKTIENGESELLSCHAFT, 80333 München (DE)
(72) Erfinder: Kowalski, Waldemar, 45472 Mülheim an der Ruhr (DE); Lehmann, Christoph, Dr., 47506 Neukirchen-Vluyn (DE); Spiess, Karlheinz, 47445 Moers (DE)

(56) Entgegenhaltungen:
- US-A- 2 695 368
- US-A- 3 978 359
- US-A- 4 274 021

## Beschreibung

Die Erfindung betrifft eine Anordnung mit zwei stromleitenden Generatorstäben für einen elektrischen Generator, die über ein jeweiliges Stabende elektrisch miteinander in Verbindung stehen. Die Erfindung betrifft ferner einen elektrischen Generator mit einer derartigen Anordnung. Darüber hinaus betrifft die Erfindung ein Verfahren zum Verbinden zweier stromleitender Generatorstäbe eines elektrischen Generators über ein jeweiliges Stabende der beiden Generatorstäbe.

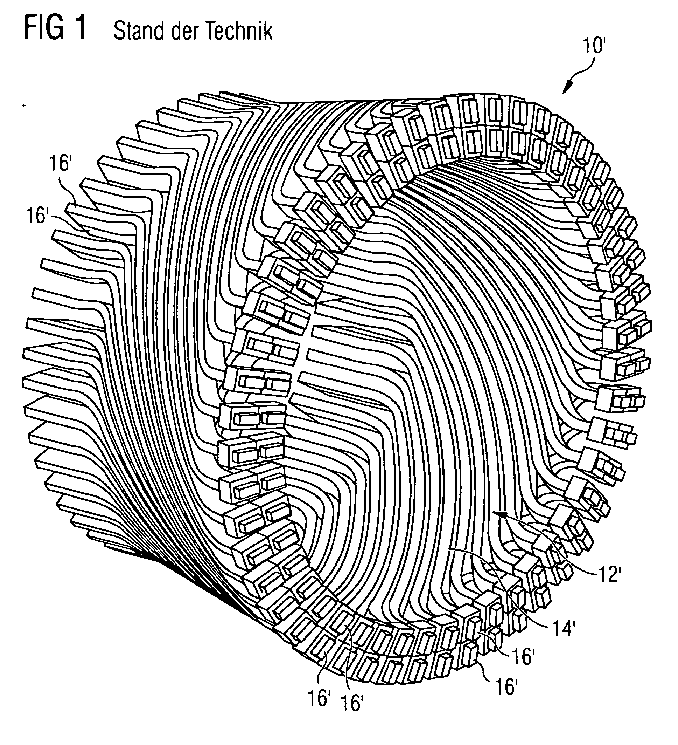

Die vorgenannten Generatorstäbe sind insbesondere für einen Ständer eines elektrischen Generators bestimmt. Ein aus dem Stand der Technik bekannter Ständerwickelkopf für einen elektrischen Generator ist in Fig. 1 schematisch dargestellt. Ein elektrischer Generator besteht im Wesentlichen aus zwei Teilen, einem Ständer oder Stator als feststehendem Teil und einem innerhalb des Ständers angeordneten Rotor oder Läufer. Ein Ständerwickelkopf 10' des Ständers besteht aus einer Vielzahl von Generatorstäben 12', die elektrisch miteinander verschaltet sind. Die Generatorstäbe 12' weisen Oberlagestäbe sowie Unterlagestäbe auf, wobei jeweils ein Oberlagestab und ein Unterlagestab elektrisch miteinander verbunden ist. Jeder der Generatorstäbe 12' weist dabei jeweilige Stabenden 16', sowie eine dazwischen verlaufende Evolvente 14' auf. Die jeweiligen Generatorstäbe 12' weisen eine Vielzahl von Teilleitern auf, die mit einander verdrillt sind.

Bei der Herstellung eines Ständerwickelkopfs 10' werden im Stand der Technik eine Vielzahl von Generatorstäben 12' in entsprechende Nuten eines Blechpakets des Ständers eingelegt. Fertigungsbedingt fluchten die Stabenden 16' von jeweils einander zugeordneten Oberlage- und Unterlagestäben an den Kontaktstellen normalerweise nie. Daher werden die Stabenden 16' mit in entgegengesetzten Richtungen verschwenkten Evolventen 14' bei der Herstellung des Ständerwickelkopfes 10' mechanisch aufeinander ausgerichtet. Das heißt, die Stabenden 16' werden mit entsprechenden Werkzeugen in geeignete Stellungen gebogen. Daraufhin werden die jeweils aufeinander ausgerichteten Stabenden 16' mechanisch verbunden. Diese mechanische Verbindung wird gemäß dem Stand der Technik beispielsweise durch Verlöten oder durch Verschrauben mittels entsprechenden Verschraubungselementen bewerkstelligt.

Die US 4,274,021 A, US 3,978,359 A und die US 2,695,368 A offenbaren jeweils eine Anordnung mit zwei stromleitenden Generatorstäben.

Eine der Erfindung zugrunde liegende Aufgabe besteht darin, einen elektrischen Generator der eingangs genannten Art dahingehend zu verbessern, dass dessen Herstellung unaufwändiger und damit kostengünstiger erfolgen kann.

Diese Aufgabe wird gelöst durch eine Anordnung gemäß Anspruch 1 und einem Verfahren gemäß Anspruch 9.

Durch das erfindungsgemäße Verbinden der jeweiligen Stabenden der beiden Generatorstäbe über die in dem Behälter befindliche elektrisch leitende Füllmasse ist ein genaues Ausrichten der zu kontaktierenden Stabenden im Gegensatz zum Stand der Technik nicht mehr, bzw. nicht mehr mit der gleichen Genauigkeit notwendig. Die bisher durch das Ausrichten verursachte übermäßige Beanspruchung der Generatorstäbe vor Herstellung der elektrischen Verbindung wird damit wesentlich verringert bzw. entfällt vollständig. Damit ist zunächst eine Zeit- und somit Kostenersparnis bei der Montage des Ständerwickelkopfes verbunden. Weiterhin wird die Gefahr der mechanischen Überbeanspruchung der Generatorstäbe verringert. Dies führt dazu, dass Isolationsbrüche, Teilleiter- bzw. Hohlleiterbrüche sowie undichte Wicklungen vermieden werden können.

Der Behälter weist eine Öffnung zum Einfüllen der Füllmasse auf, und ist insbesondere becherförmig oder trichterförmig ausgebildet. Damit ist der Behälter besonders einfach mit der elektrisch leitenden Füllmasse zu befüllen, wodurch der erfindungsgemäße Ständerwickelkopf verhältnismäßig einfach und damit kostengünstig hergestellt werden kann. Vor teilhafterweise wird die Füllmasse dabei in flüssigem Zustand in den Behälter eingefüllt und erstarrt daraufhin, sodass eine feste Verbindung entsteht.

Eines der beiden elektrisch miteinander in Verbindung stehenden Stabenden weist einen Kontaktabschnitt auf, der in den Behälter hineinragt. Der Kontaktabschnitt ragt durch die vorgenannte Öffnung zum Einfüllen der Füllmasse in den Behälter hinein. Darin wird der Kontaktabschnitt des Stabendes mittels der elektrisch leitenden Füllmasse fixiert. Diese Ausführungsform ermöglicht eine einfache und stabile Verbindung der beiden Stabenden.

Eine besonders einfach herzustellende und stabile Verbindung ergibt sich, wenn der in den Behälter hineinragende Kontaktabschnitt einen Vorsprung aufweist, der insbesondere zapfenförmig ausgebildet ist.

In einer weiteren zweckmäßigen Ausführungsform trennt die Füllmasse den in den Behälter hineinragenden Kontaktabschnitt von dem Behälter. Das heißt, zwischen dem in den Behälter hineinragenden Kontaktabschnitt und dem Behälter besteht kein direkter Kontakt. Der Aufnahmebereich in dem Behälter ist derart bemessen, dass der Kontaktabschnitt der Stabenden ohne genaues Ausrichten des Kontaktabschnitts aufgenommen werden kann. Damit kommt es beim das Einführen des Kontaktabschnitts in den Behälter betreffenden Montageabschnitt nicht zu Verklemmungen oder Verspannungen. Dies erleichtert die Montage insgesamt und macht diese weniger fehleranfällig.

Es ist weiterhin zweckmäßig, wenn die beiden Stabenden aufeinander hingebogen sind, insbesondere so, dass jeweilige Kontaktabschnitte der beiden Stabenden jeweils um etwa 90° gegenüber einem entsprechenden, an das jeweilige Stabende anschließenden Stabhauptabschnitt abgewinkelt sind. Damit sind die Stirnflächen der jeweiligen Kontaktabschnitte einander zugewandt. Bei jeweiliger Abwinklung der Kontaktabschnitte um etwa 90° gegenüber dem entsprechenden Stabhauptabschnitt sind die Kontaktabschnitte sogar aufeinander ausgerichtet. Sie können damit so angeordnet werden, dass sie mit ihren Stirnflächen, lediglich von einer Teilfuge getrennt, aufeinander treffen. Bei einer derartigen Anordnung lässt sich eine besonders stabile Verbindung zwischen den beiden Kontaktabschnitten herstellen, wodurch weiterhin eine besonders gute elektrische Stromleitung ermöglicht wird.

In einer weiteren vorteilhaften Ausführungsform weisen die jeweiligen, elektrisch miteinander in Verbindung stehenden Stabenden ausschließlich stromleitende Teilleiter auf. Insbesondere sind diese stromleitenden Teilleiter metallische Teilleiter, die beispielsweise Kupfer aufweisen. In der aufgeführten vorteilhaften Ausführungsform sind die stromleitenden Teilleiter insbesondere von wasserführenden Rohren getrennt. Wasserführende Rohre werden damit nicht aufeinander hin gebogen, sondern werden jeweils mit einem Wasseranschluss verbunden. Indem sich der Biegevorgang auf die stromleitenden Teilleiter beschränkt, kann der dafür benötigte Aufwand minimiert werden.

Vorteilhafterweise ist der Behälter an einem der beiden Stabenden befestigt. Insbesondere weist der Behälter einen Befestigungsabschnitt auf, der das entsprechende Stabende beispielsweise schellenartig umgreift. Der Behälter ist vorteilhafterweise so angeordnet, dass die Richtung, in welche die Öffnung zum Einführen des Kontaktabschnittes des anderen Generatorstabes zeigt, einen rechten Winkel mit der Längserstreckung eines Hauptabschnittes des an dem Behälter befestigten Generatorstabes bildet. Vorteilhafterweise ist auch der in den Behälter hineinragende Kontaktabschnitt, der insbesondere zapfenförmig ausgebildet ist, als separates an dem entsprechenden Stabende befestigtes Bauteil ausgebildet. Auch dieses Bauteil umfasst vorteilhafterweise einen Befestigungsabschnitt, der das Stabende z.B. schellenartig umgreift. Auch hier ist es vorteilhaft, wenn der Kontaktabschnitt im rechten Winkel mit der Längserstreckung eines Hautabschnittes des zugehörigen Generatorstabes angeordnet ist. Damit sind der Behälter und der in diesen hineinragende Kontaktabschnitt in ihren Richtungserstreckungen aufeinander angepasst. Damit kann eine besonders stabile Verbindung der Stabenden erzielt werden.

Darüber hinaus ist es vorteilhaft, wenn die Füllmasse einen elektrisch leitfähigen Kunststoff, einen elektrisch leitfähigen Kleber, und/oder ein Metall, insbesondere Hartlot aufweist. Mit diesen Füllmassen lassen sich stabile Verbindungen der beiden Stabenden herstellen. Gleichzeitig kann die Befüllung des Behälters und das darauf folgende Erhärten und Erstarren der Füllmasse zeit- und kosteneffizient durchgeführt werden. Eine Verwendung von elektrisch leitfähigem Kleber bietet den Vorteil, dass dieser bei Raumtemperatur in den Behälter eingefüllt werden kann. Damit kann eine Wärmebeanspruchung des Behälters und der entsprechenden Abschnitte der Stabenden vermieden werden.

In einer vorteilhaften Ausführungsform des erfindungsgemäßen Verfahrens zum Verbinden zweier stromleitender Generatorstäbe ist es vorteilhaft, wenn der Behälter an einem der beiden Stabenden vor dem Einführen des anderen Stabendes in den Behälter befestigt wird.

Weiterhin ist es zweckmäßig, wenn das Stabende mindestens eines der beiden Generatorstäbe vor dem Einführen des Stabendes in den Behälter abgewinkelt wird. Vorteilhafterweise werden die beiden zu kontaktierenden Stabenden aufeinander hingebogen. Die Generatorstäbe sind insbesondere vor dem Biegen ihrer Stabenden an einem Generatorständer montiert. Das Aufeinanderhinbiegen der beiden Stabenden geschieht insbesondere durch ein Abwinkeln von jeweiligen Kontaktabschnitten der beiden Stabenden um etwa 90° gegenüber einem an das jeweilige Stabende anschließenden Stabhauptabschnitt.

Um die elektrische Verbindung der beiden Stabenden möglichst kompakt ausführen zu können, ist es vorteilhaft, wenn vor dem Einführen des Stabendes eines der beiden Generatorstäbe in den Behälter elektrisch leitende Teilleiter in dem Stabende von wasserführenden Rohren getrennt werden, sodass das in den Behälter eingeführte Stabende ausschließlich elektrisch leitende Teilleiter umfasst.

Weiterhin ist es vorteilhaft, wenn das Befüllen des Behälters ein Ausgießen des Behälters mit der elektrisch leitenden Füllmasse beinhaltet. Durch das Ausgießen kann auf herstellungstechnisch effiziente Weise eine stabile Verbindung zwischen den beiden Generatorstäben hergestellt werden.

Weiterhin ist es fertigungstechnisch vorteilhaft, wenn die beiden Generatorstäbe vor dem Befüllen des Behälters an einem Generatorständer montiert werden und nach dem Befüllen des Behälters der Generatorständer zum Befüllen eines weiteren Behälters, welcher den weiteren zwei Generatorstäben zugeordnet ist, weitergedreht wird. Beim Befüllen des Behälters weist die Öffnung des Behälters vorteilhafterweise nach oben. Auf die angegebene Weise können alle Generatorstäbe eines Generatorständers zeit- und damit kosteneffizient elektrisch miteinander verbunden werden.

Nachfolgend sind zwei Ausführungsbeispiele einer erfindungsgemäßen Anordnung mit mindestens zwei stromleitenden Generatorstäben für einen elektrischen Generator anhand der beigefügten schematischen Zeichnungen näher erläutert. Es zeigt:
- Fig. 1: eine perspektivische Ansicht eines aus dem Stand der Technik bekannten Ständerwickelkopfes für einen elektrischen Generator,
- Fig. 2: eine perspektivische Ansicht einer Verbindung zweier Generatorstäbe gemäß eines ersten Ausführungsbeispiel der Erfindung, sowie
- Fig. 3: eine Schnittansicht einer Verbindung zweier Generatorstäbe gemäß eines zweiten Ausführungsbeispiels der Erfindung.

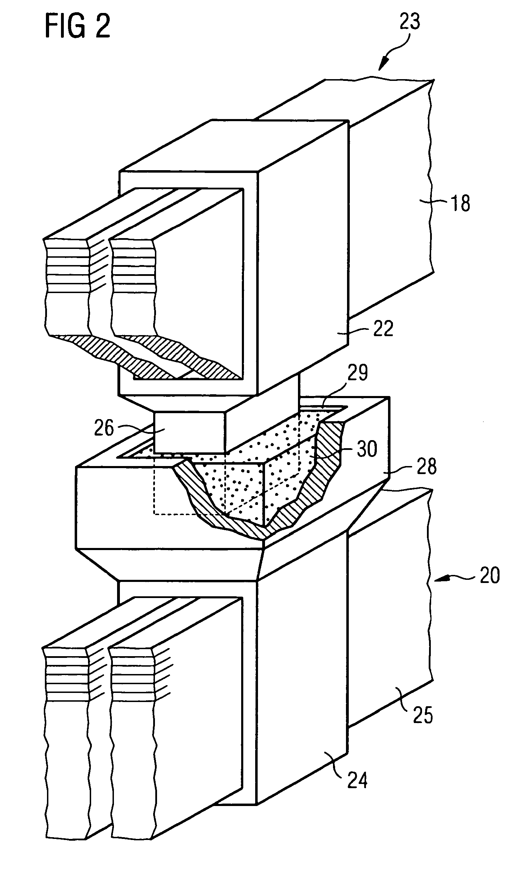

Fig. 2 zeigt ein erstes Ausführungsbeispiel der erfindungsgemäßen Anordnung zweier stromleitender Generatorstäbe 18 und 20, nämlich eines Oberlagestabes 18 sowie eines Unterlagestabes 20, die über jeweilige Stabenden 22 und 24, nämlich über ein Oberlagestabende 22 des Oberlagestabes 18 sowie ein Unterlagestabende 24 des Unterlagestabes 20 miteinander in Verbindung stehen. Das Oberlagestabende 22 weist einen Kontaktabschnitt 26 in Form eines zapfenförmigen Vorsprungs auf. Der Kontaktabschnitt 26 weist dabei eine gegenüber einer Erstreckungsrichtung eines Oberlagestabhauptabschnittes 23 etwa um 90° gedrehte Ausrichtung auf. Sowohl der Oberlagestab 18 als auch der Unterlagestab 20 weisen stromführende Teilleiter auf, die vorzugsweise als Massivleiter ausgeführt sind. Weiterhin können der Oberlagestab 18 und der Unterlagestab 20 auch Hohlteilleiter zur Kühlung enthalten, die insbesondere ebenfalls Strom führen können.

Das Unterlagestabende 24 ist mit einem Behälter 28 in Form eines Bechers oder Trichters versehen. Der Behälter 28 weist eine Öffnung 29 auf, die das Innere des Behälters 28 in einer gegenüber der Erstreckungsrichtung eines Unterlagestabhauptabschnitts 25 um etwa 90° gedrehten Richtung freigibt. Zum elektrisch leitenden Verbinden des Oberlagestabes 18 mit dem Unterlagestab 20 wird der Kontaktabschnitt 26 in Form eines zapfenförmigen Vorsprungs von oben her in die Öffnung 29 des Behälters 28 eingeführt. Dabei wird zwischen dem Kontaktabschnitt 26 und dem Behälter 28 ein Zwischenraum gelassen, der so bemessen ist, dass bei dem üblichen Versatz der Generatorstäbe 18 und 20 zueinander der Kontaktabschnitt 26 die Innenwände des Behälters 28 nicht berührt.

Ohne Ausrichtung wird nun der Behälter 28 mit einer elektrisch leitenden Füllmasse 30 ausgefüllt. Die elektrisch leitende Füllmasse 30 kann einen speziell elektrisch leitfähigen Kunststoff bzw. einen elektrisch leitfähigen Kleber und/oder ein Metall, insbesondere Hartlot umfassen. Beim Aushärten des Kunststoffes oder des Klebers bzw. beim Erstarren des Metalls werden neben einer elektrisch leitenden Verbindung auch eine mechanische Verbindung der Generatorstäbe 18 und 20 hergestellt. Bei der Befüllung des Behälters 28 ist dieser so angeordnet, dass er nach oben offen ist. Hierzu wird ein die Generatorstäbe 18 und 20 haltender Generatorständer in eine entsprechende Drehposition gebracht. Nach Befüllen des Behälters 28 wird der Generatorständer weitergedreht, um entsprechende weitere Behälter zur Verbindung weiterer Generatorstäbe zu befüllen. Das Einlegen der Generatorstäbe 18 und 20 in den Generatorständer, das Ausfüllen des Behälters 28 bzw. das Weiterdrehen des Ständers kann automatisiert durch Roboter erfolgen.

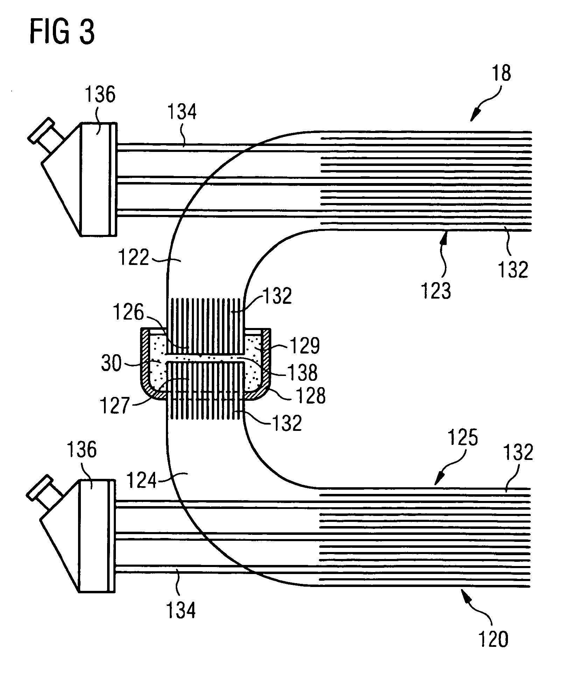

Fig. 3 zeigt ein zweites Ausführungsbeispiel der erfindungsgemäßen Anordnung zweier stromleitender Generatorstäbe 118 und 120, nämlich eines Oberlagestabes 118 und eines Unterlagestabes 120. Der Oberlagestab 118 und der Unterlagestab 120 weisen jeweils ein Oberlagestabende 122 bzw. ein Unterlagestabende 124 sowie einen Oberlagestabhauptabschnitt 123 bzw. einen Unterlagestabhauptabschnitt 125 auf. Die Generatorstäbe 118 und 120 umfassen in ihren Hauptabschnitten 123 und 125 parallel verlaufende elektrische Teilleiter 132 in Form von Kupferteilleitern sowie zwischen den elektrischen Teilleitern 132 eingelegte wasserführende Rohre 134 zur Kühlung der Generatorstäbe 118 und 120. An den jeweiligen Stabenden 122 und 124 werden die vorzugsweise nicht an der Stromleitung teilnehmenden wasserführenden Rohre 134 von den elektrischen Teilleitern 132 getrennt. Die wasserführenden Rohre 134 werden daraufhin mit Kühlwasseranschlüssen 136 verbunden.

Die elektrischen Teilleiter 132 wiederum werden um etwa 90° abgewinkelt, so dass die Teilleiter 132 des Oberlagestabendes 122 und des Unterlagestabendes 124 auf halbem Wege, lediglich von einer Teilfuge 138 getrennt, einander gegenüber liegen. Im Bereich der Teilfuge 138 wird am Unterlagestab 120 ein Behälter 128 angebracht, von dem jeweilige Kontaktabschnitte 126 und 127 der Generatorstabenden 122 und 124 umfasst sind. Der Behälter 128 ist in Form eines Bechers oder Trichters ausgeführt und weist an seiner Oberseite eine entsprechende Öffnung 129 auf. Durch die Öffnung 129 wird nach Einführen der jeweiligen Kontaktabschnitte 126 und 127 in den Behälter 128 elektrisch leitende Füllmasse 30 eingefüllt.

## Patentansprüche

1. Anordnung mit zwei stromleitenden Generatorstäben (18, 20; 118, 120) für einen elektrischen Generator,
die über ein jeweiliges Stabende (22, 24; 122, 124) elektrisch miteinander in Verbindung stehen,
die jeweiligen elektrisch miteinander in Verbindung stehenden Stabenden (22, 24; 122, 124) der beiden Generatorstäbe (18, 20; 118, 120) über eine in einem Behälter (28; 128) befindliche elektrisch leitende Füllmasse (30) miteinander verbunden sind,
wobei der Behälter (28; 128) eine Öffnung (29; 129) zum Einfüllen der Füllmasse (30) aufweist,
wobei eines der beiden Stabenden (22, 24; 122, 124) mit einem Kontaktabschnitt (26; 126, 127) durch die Öffnung (29; 129) in den Behälter (28; 128) hineinragt,
**dadurch gekennzeichnet, dass**
der Behälter (28; 128) mit der Füllmasse (30) ausgegossen ist.

2. Anordnung nach Anspruch 1,
**dadurch gekennzeichnet, dass**
der in den Behälter (28; 128) hineinragende Kontaktabschnitt (26; 126, 127) einen Vorsprung (26) aufweist, der insbesondere zapfenförmig ausgebildet ist.

3. Anordnung nach Anspruch 1 oder 2.
**dadurch gekennzeichnet, dass**
die Füllmasse (30) den in den Behälter (28; 128) hinragenden Kontaktabschnitt (26; 126, 127) von dem Behälter (28; 128) trennt.

4. Anordnung nach einem der vorausgehenden Ansprüche,
**dadurch gekennzeichnet, dass**
die beiden Stabenden (122, 124) aufeinander hin gebogen sind,
insbesondere so, dass jeweilige Kontaktabschnitte (126, 127) der beiden Stabenden (122, 124) jeweils um etwa 90° gegenüber einem entsprechenden, an das jeweilige Stabende (122, 124) anschließenden Stabhauptabschnitt (123, 125) abgewinkelt sind.

5. Anordnung nach einem der vorausgehenden Ansprüche,
**dadurch gekennzeichnet, dass**
die jeweiligen, elektrisch miteinander in Verbindung stehenden Stabenden (22, 24; 122, 124) ausschließlich stromleitende Teilleiter aufweisen.

6. Anordnung nach einem der vorausgehenden Ansprüche,
**dadurch gekennzeichnet, dass**
der Behälter (28) an einem der beiden Stabenden (22, 24; 122, 124) befestigt ist.

7. Anordnung nach einem der vorausgehenden Ansprüche,
**dadurch gekennzeichnet, dass**
die Füllmasse (30) einen elektrisch leitfähigen Kunststoff, einen elektrisch leitfähigen Kleber und/oder ein Metall,
insbesondere Hartlot aufweist.

8. Elektrischer Generator mit einer Anordnung nach einem der vorausgehenden Ansprüche.

9. Verfahren zum Verbinden zweier stromleitender Generatorstäbe (18, 20; 118, 120) eines elektrischen Generators über ein jeweiliges Stabende (22, 24; 122, 124) der beiden Generatorstäbe (18, 20; 118, 120), **gekennzeichnet durch**
ein Einführen des Stabendes (22, 24; 122, 124) eines der beiden Generatorstäbe (18, 20; 118, 120) in einen mit dem Stabende (22, 24; 122, 124) des anderen Generatorstabes verbundenen Behälter (28; 128) und ein Ausgießen des Behälters (28; 128) mit einer elektrisch leitenden Füllmasse (30).

10. Verfahren nach Anspruch 9,
**gekennzeichnet durch**
ein Befestigen des Behälters (128) an einem der beiden Stabenden (124) vor dem Einführen des anderen Stabendes (122) in den Behälter (128).

11. Verfahren nach Anspruch 9 oder 10,
**gekennzeichnet durch**
ein Abwinkeln des Stabendes (122, 124) mindestens eines der beiden Generatorstäbe (118, 120) vor dem Einführen des Stabendes (122, 124) in den Behälter (128).

12. Verfahren nach einem der Ansprüche 9 bis 11,
**dadurch gekennzeichnet, dass**
vor dem Einführen den Stabendes (122, 124) eines der beiden Generatorstäbe (118, 120) in den Behälter (128) elektrisch leitende Teilleiter (132) in dem Stabende (122, 124) von wasserführenden Rohren (134) getrennt werden, sodass das in den Behälter (128) eingeführte Stabende (122) ausschließlich elektrisch leitende Teilleiter (132) umfasst.

13. Verfahren nach einem der Ansprüche 9 bis 12,
**dadurch gekennzeichnet, dass**
das Befüllen des Behälters (28; 128) ein Ausgießen des Behälters (28; 128) mit der elektrisch leitenden Füllmasse (30; 130) beinhaltet.

14. Verfahren nach einem der Ansprüche 9 bis 13,
**dadurch gekennzeichnet, dass**
die beiden Generatorstäbe (18, 20; 118, 120) vor dem Befüllen des Behälters (28; 128) an einem Generatorständer montiert werden und nach dem Befüllen des Behälters (28; 128) der Generatorständer zum Befüllen eines weiteren Behälters, welcher weiteren zwei Generatorstäben zugeordnet ist, weitergedreht wird.

## Claims

1. Arrangement with two current-conducting generator bars (18, 20; 118, 120) for an electric generator, which are electrically connected to one another via a respective bar end (22, 24; 122, 124), the respective bar ends (22, 24; 122, 124), which are electrically connected to one another, of the two generator bars (18, 20; 118, 120) being connected to one another via an electrically conductive filling compound (30) located in a container (28; 128), the container (28; 128) having an opening (29; 129) for introducing the filling compound (30), one of the two bar ends (22, 24; 122; 124) protruding with a contact section (26; 126, 127) through the opening (29; 129) into the container (28; 128), **characterized in that** the filling compound (30) is poured into the container (28; 128).

2. Arrangement according to Claim 1, **characterized in that** the contact section (26; 126, 127) which protrudes into the container (28; 128) has a projection (26), which is in particular in the form of a pin.

3. Arrangement according to Claim 1 or 2, **characterized in that** the filling compound (30) separates the contact section (26; 126, 127) which protrudes into the container (28; 128) from the container (28; 128).

4. Arrangement according to one of the preceding claims, **characterized in that** the two bar ends (122, 124) are bent towards one another, in particular such that respective contact sections (126, 127) of the two bar ends (122, 124) are bent back in each through approximately 90° with respect to a corresponding main bar section (123, 125), which adjoins the respective bar end (122, 124).

5. Arrangement according to one of the preceding claims, **characterized in that** the respective bar ends (22, 24; 122, 124) which are electrically connected to one another have exclusively current-conducting subconductors.

6. Arrangement according to one of the preceding claims, **characterized in that** the container (28) is fastened to one of the two bar ends (22, 24; 122, 124).

7. Arrangement according to one of the preceding claims, **characterized in that** the filling compound (30) has an electrically conductive polymer, an electrically conductive adhesive and/or a metal, in particular hard solder.

8. Electrical generator with an arrangement according to one of the preceding claims.

9. Method for connecting two current-conducting generator bars (18, 20; 118, 120) of an electrical generator via a respective bar end (22, 24; 122, 124) of the two generator bars (18, 20; 118, 120), **characterized by** insertion of the bar end (22, 24; 122, 124) of one of the two generator bars (18, 20; 118, 120) into a container (28; 128), which is connected to the bar end (22, 24; 122, 124) of the other generator bar, and pouring an electrically conductive filling compound (30) into the container (28; 128).

10. Method according to Claim 9, **characterized by** fastening the container (128) to one of the two bar ends (124) prior to the insertion of the other bar end (122) into the container (128).

11. Method according to Claim 9 or 10, **characterized by** bending back the bar end (122, 124) of at least one of the two generator bars (118, 120) prior to the insertion of the bar end (122, 124) into the container (128).

12. Method according to one of Claims 9 to 11, **characterized in that**, prior to the insertion of the bar end (122, 124) of one of the two generator bars (118, 120) into the container (128), electrically conducting subconductors (132) in the bar end (122, 124) are separated from water-conducting pipes (134), with the result that that bar end (122) which has been inserted into the container (128) comprises exclusively electrically conducting subconductors (132).

13. Method according to one of Claims 9 to 12, **characterized in that** the filling of the container (28; 128) includes pouring the electrically conductive filling compound (30; 130) into the container (28; 128).

14. Method according to one of Claims 9 to 13, **characterized in that** the two generator bars (18, 20; 118, 120) are fitted on a generator stand prior to filling of the container (28; 128) and, once the container (28; 128) has been filled, the generator stand is rotated on so as to fill a further container, which further container has two associated generator bars.

## Revendications

1. Dispositif comprenant deux barres ( 18, 20 ; 118, 120 ) de génératrice conductrices du courant pour une génératrice électrique,
qui sont en liaison entre elles électriquement par une extrémité ( 22, 24 ;122, 124 ) respective de barre,
des extrémités ( 22, 24 ; 122, 124 ) de barre respectives en liaison entre elles électriquement des deux barres ( 18, 20 ; 118, 120 ) de génératrice étant reliées entre elles par une composition ( 30 ) de remplissage conductrice électriquement se trouvant dans un récipient ( 28 ; 128 )
dans lequel le récipient ( 28 ; 128 ) comporte une ouverture ( 29 ; 129 ) pour le remplissage par la composition ( 30 ) de remplissage,
dans lequel l'une des deux extrémités ( 22, 24 ; 122, 124 ) de barre pénètre par un tronçon ( 26 ; 126, 127 ) de contact dans le récipient ( 28 ;128 ) en passant par l'ouverture ( 29 ; 129 )
**caractérisé en ce que**
la composition ( 30 ) de remplissage est coulée dans le récipient ( 28 ; 128 ).

2. Dispositif suivant la revendication 1,
**caractérisé en ce que**
le tronçon ( 26 ; 126, 127 ) de contact pénétrant dans le récipient ( 28 ; 128 ) comporte une saillie ( 26 ) qui est constituée notamment en forme de tenon.

3. Dispositif suivant la revendication 1 ou 2,
**caractérisé en ce que**
la composition ( 30 ) de remplissage sépare du récipient ( 28 ; 128 ) le tronçon ( 26 ; 126, 127 ) de contact pénétrant dans le récipient ( 28 ; 128 ).

4. Dispositif suivant l'une des revendications précédentes, **caractérisé en ce que**
les deux extrémités ( 122, 124 ) de barre sont courbées l'une sur l'autre,
notamment de manière à ce que des tronçons ( 126, 127 ) respectifs de contact des deux extrémités ( 122, 124 ) de barre soient coudés respectivement d'environ 90° par rapport à un tronçon ( 123, 125 ) principal de barre correspondant se raccordant à l'extrémité ( 122, 124 ) respective de barre.

5. Dispositif suivant l'une des revendications précédentes,
**caractérisé en ce que**
les extrémités ( 22, 24 ; 122, 124 ) respectives de barre en liaison électriquement entre elles comportent exclusivement des conducteurs partiels conduisant le courant.

6. Dispositif suivant l'une des revendications précédentes,
**caractérisé en ce que**
le récipient ( 28 ) est fixé à l'une des deux extrémités ( 22, 24 ; 122, 124 ) de barre.

7. Dispositif suivant l'une des revendications précédentes, **caractérisé en ce que**
la masse ( 30 ) de remplissage comporte une matière plastique conductrice de l'électricité, une colle conductrice de l'électricité et/ou un métal,
notamment une brasure dure.

8. Génératrice électrique ayant un dispositif suivant l'une des revendications précédentes.

9. Procédé de liaison de deux barres ( 18, 20 ; 118, 120 ) de génératrice conductrices du courant d'une génératrice électrique par une extrémité ( 22, 24 ; 122, 124 ) respective de barre des deux barres ( 18, 20 ; 118, 120 ) de génératrice,
**caractérisé par**
une introduction de l'extrémité ( 22, 24 ; 122, 124 ) de barre de l'une des deux barres ( 18, 20 ; 118, 120 ) de génératrice dans un récipient ( 28, 128 ) relié à l'extrémité ( 22, 24 ; 122, 124 ) de barre de l'autre barre de génératrice et par une coulée d'une composition ( 30 ) de remplissage conductrice de l'électricité dans le récipient ( 28 ; 128 ).

10. Procédé suivant la revendication 9,
**caractérisé par**
une fixation de récipient ( 128 ) à l'une des deux barres ( 124 ) avant l'introduction de l'autre extrémité ( 122 ) de barre dans le récipient ( 128 ).

11. Procédé suivant la revendication 9 ou 10
**caractérisé par**
un coudage de l'extrémité ( 122, 124 ) de barre d'au moins l'une des deux barres ( 118, 120 ) de génératrice avant l'introduction de l'extrémité ( 122, 124 ) de barre dans le récipient ( 128 ).

12. Procédé suivant l'une des revendications 9 ou 10
**caractérisé en ce que**,
avant l'introduction de l'extrémité ( 122, 124 ) de barre de l'une des deux barres ( 118, 120 ) de génératrice dans le récipient ( 128 ), des conducteurs ( 132 ) partiels conductrices de l'électricité dans l'extrémité ( 122, 124 ) de barre sont séparés par des tubes ( 134 ) conduisant de l'eau de manière à ce que l'extrémité ( 122 ) de barre introduite dans le récipient ( 128 ) comprenne exclusivement des conducteurs ( 132 ) partiels conducteurs de l'électricité.

13. Procédé suivant l'une des revendications 9 à 12,
**caractérisé en ce que**
le remplissage du récipient ( 28 ; 128 ) comporte une coulée de la composition ( 30 ; 130 ) de remplissage conductrice de l'électricité dans le récipient ( 28 ; 128 ).

14. Procédé suivant l'une des revendications 9 à 13,
**caractérisé en ce que**
les deux barres ( 18, 20 ;118, 120 ) de génératrice sont, avant le remplissage du récipient ( 28 ; 128 ), montées sur un stator de génératrice et, après le remplissage du récipient ( 28 ; 128 ), on continue à tourner le stator de la génératrice pour remplir un autre récipient qui est associé à deux autres barres de génératrice.
